(19) **Europäisches Patentamt**
**European Patent Office**
**Office européen des brevets**

(11) **EP 1 046 131 B1**

(12) **EUROPÄISCHE PATENTSCHRIFT**

(45) Veröffentlichungstag und Bekanntmachung des Hinweises auf die Patenterteilung:
**16.07.2008 Patentblatt 2008/29**

(51) Int Cl.:
**G06K 19/073** (2006.01)

(21) Anmeldenummer: **99948823.2**

(22) Anmeldetag: **21.09.1999**

(86) Internationale Anmeldenummer:
**PCT/EP1999/007025**

(87) Internationale Veröffentlichungsnummer:
**WO 2000/019367 (06.04.2000 Gazette 2000/14)**

(54) **DATENVERARBEITUNGSEINRICHTUNG UND VERFAHREN ZU DESSEN BETRIEB ZUM VERHINDERN EINER DIFFERENTIELLEN STROMVERBRAUCHANALYSE**

DATA PROCESSING DEVICE AND OPERATING METHOD FOR PREVENTING A DIFFERENTIAL CURRENT CONSUMPTION ANALYSIS

DISPOSITIF DE TRAITEMENT DE DONNEES ET SON MODE DE FONCTIONNEMENT PERMETTANT D'EMPECHER UNE ANALYSE DIFFERENTIELLE DE LA CONSOMMATION DE COURANT

(84) Benannte Vertragsstaaten:
**AT DE FR GB**

(30) Priorität: **30.09.1998 DE 19844962**
**05.08.1999 DE 19936938**

(43) Veröffentlichungstag der Anmeldung:
**25.10.2000 Patentblatt 2000/43**

(73) Patentinhaber:
• **NXP B.V.**
**5656 AG Eindhoven (NL)**
• **Philips Intellectual Property & Standards GmbH**
**20099 Hamburg (DE)**
Benannte Vertragsstaaten:
**DE**

(72) Erfinder: **FEUSER, Markus**
**NL-5656 AA Eindhoven (NL)**

(74) Vertreter: **Peters, Carl Heinrich et al**
**Philips Intellectual Property & Standards GmbH,**
**Postfach 50 04 42**
**52088 Aachen (DE)**

(56) Entgegenhaltungen:
**EP-A- 0 482 975          US-A- 4 932 053**
**US-A- 5 265 162**

EP 1 046 131 B1

**Beschreibung**

Die Erfindung betrifft ein Verfahren zum Betreiben einer Datenverarbeitungseinrichtung, insbesondere einer Chipkarte, mit einer integrierten Schaltung, welche in Abhängigkeit von einem Taktsignal Nutzrechenoperationen, insbesondere kryptographische Operationen, ausführt, gemäß dem Oberbegriff des Anspruchs 1. Die Erfindung betrifft ferner eine Datenverarbeitungseinrichtung, insbesondere Chipkarte, insbesondere zum Ausführen des Verfahrens, mit einer integrierten Schaltung, welche in Abhängigkeit von einem Taktsignal Nutzrechenoperationen, insbesondere kryptographische Operationen, ausführt, gemäß dem Oberbegriff des Anspruchs 4.

In vielen Datenverarbeitungsgeräten mit integrierter Schaltung dienen beispielsweise kryptographische Operationen zum Schutz des Betriebes dieser Geräte bzw. zum Schutz von in dem Gerät transportierten Daten. Die hierfür notwendigen Rechenoperationen werden dabei sowohl von Standard-Rechenwerken als auch von dedizierten Crypto-Rechenwerken durchgeführt. Ein typisches Beispiel für letzteres sind Chipkarten bzw. IC-Karten. Bei in diesem Zusammenhang verwendeten Daten bzw. Zwischenergebnissen handelt es sich üblicherweise um sicherheitsrelevante Informationen, wie beispielsweise kryptographische Schlüssel oder Operanden.

Bei von der integrierten Schaltung durchgeführten Rechenoperationen, beispielsweise zur Berechnung von kryptographischen Algorithmen, werden logische Verknüpfungen zwischen Operanden bzw. Zwischenergebnissen durchgeführt. In Abhängigkeit von der verwendeten Technologie führen diese Operationen, insbesondere das Laden von leeren oder zuvor gelöschten Speicherbereichen bzw. Register mit Daten, zu einem erhöhten Stromverbrauch der Datenverarbeitungsgeräte. Bei komplementärer Logik, wie beispielsweise der CMOS-Technik, tritt ein erhöhter Stromverbrauch dann auf, wenn der Wert einer Bit-Speicherzelle geändert wird, d.h. sein Wert sich von "0" auf "1" bzw. von "1" auf "0" ändert. Der erhöhte Verbrauch hängt dabei von der Anzahl der im Speicher bzw. Register geänderten Bitstellen ab. Mit anderen Worten läßt das Laden eines zuvor gelöschten Registers einen Stromverbrauch proportional zum Hamminggewicht des in das leere Register geschriebenen Operanden (=Anzahl der Bits mit dem Wert "1") ansteigen. Durch eine entsprechende Analyse dieser Stromänderung könnte es möglich sein, Informationen über die berechneten Operationen zu extrahieren, so dass eine erfolgreiche Kryptoanalyse von geheimen Operanden, wie beispielsweise kryptographischen Schlüsseln, möglich ist. Mittels Durchführung mehrerer Strommessungen am Datenverarbeitungsgerät könnten beispielsweise bei sehr kleinen Signaländerungen eine hinreichende Extraktion der Informationen ermöglicht werden. Andererseits könnten mehrere Strommessungen eine ggf. erforderliche Differenzbildung ermöglichen.

Diese Art der Kryptoanalyse wird auch als "Differential Power Analysis" bezeichnet, mittels derer ein Außenstehender durch reine Beobachtung von Änderungen des Stromverbrauches des Datenverarbeitungsgerätes eine ggf. unberechtigte Kryptoanalyse der kryptographischen Operationen, Algorithmen, Operanden bzw. Daten erfolgreich ausführen kann. Die "Differential Power Analysis" ermöglicht somit über eine reine Funktionalität hinaus zusätzliche interne Informationen einer integrierten Schaltung gewinnen zu können.

Aus der US 4 813 024 ist eine integrierte Schaltung zum Speichern und Verarbeiten geheimer Daten bekannt, wobei ein Speicher eine Simulationsspeicherzelle aufweist, welche einen identischen Stromverbrauch aufweist wie eine Speicherzelle, die bisher nicht programmiert wurde. Hierdurch werden Schwankungen in Strom und Spannung größtenteils aber nicht ganz eliminiert. Dieses System ist auch aufwendig und kostenintensiv.

Bei einer aus der EP 0 482 975 B1 bekannten Speicherkarte mit Mikroschaltung und wenigstens einem Speicher, die an einem Datenverarbeitungsorgan angeschlossen ist, wobei das Datenverarbeitungsorgan von einem Datensignal von außerhalb der Karte gesteuert wird und als Antwort auf dieses Datensignal zu einem Zeitpunkt ein Befehlsendesignal abgibt, welches um eine vorbestimmte Dauer (T) bzgl. des Empfangs des Datensignals verzögert ist, wird zum Erhöhen des Schutzes die Zeitdauer (T) auf Zufallsbasis zeitlich variabel gewählt. Auf diese Weise unterliegt eine Zeitspanne zwischen einem Empfang eines externen Signals und einer Anwort einem Zufallsgenerator und ist nicht zur Auswertung zum Erhalten von geheimen Daten geeignet. Eine Kryptoanalyse auf der Basis einer Stromänderung beim Beschreiben des Speichers bzw. bei Durchführen von Rechenoperationen kann dieses System jedoch nicht verhindern.

Aus der EP 0 507 669 A1 ist es bei einer Karte für elektronische Zahlung, einer sogen. Paycard, bekannt, jede Bezahleinheit nicht mit einem einzigen Bit sondern mit mehreren Bits zu besetzen, wobei die zusätzlichen Bits in einer Zufallsreihe die Bezahleinheiten durchnumerieren und von einer Zufallszahlenreihe abgeleitet sind. Diese Zufallszahlenreihe steht Verkäufern, welche eine Paycard akzeptieren, zur Verfügung. Auch dieses System kann jedoch eine Kryptoanalyse auf der Basis einer Stromänderung beim Beschreiben des Speichers bzw. bei Durchführen von Rechenoperationen nicht verhindern.

Die FR 2 693 014 B1 beschreibt eine Vorrichtung zum Auswerten von Chipkarten, wie beispielsweise eine öffentliche Telefonzelle, welche mittels einer Kapazitätsmessung feststellt, ob an eine eingeschobene Chipkarte externe Geräte angeschlossen sind.

Die EP 0 790 547 A1 offenbart ein Verfahren zum Takten einer integrierten Schaltung, bei welchem entweder ein externes Taktsignal zum Synchronisieren oder ein internes zufälliges Taktsignal verwendet wird.

Es ist Aufgabe der vorliegenden Erfindung, ein verbessertes Verfahren und eine verbesserte Datenverarbeitungseinrichtung der obengenannten Art zur Verfügung zu stellen, welche die obengenannten Nachteile beseitigen und einen wirksamen Schutz gegen eine "Differential Power Analysis" zur Verfügung stellen.

Diese Aufgabe wird durch ein Verfahren der o.g. Art mit den in Anspruch 1 gekennzeichneten Merkmalen und durch eine Datenverarbeitungseinrichtung der o.g. Art mit den in Anspruch 4 gekennzeichneten Merkmalen gelöst.

Dazu ist es bei dem Verfahren der o.g. Art erfindungsgemäß vorgesehen, dass aus dem ersten Taktsignal zufallsgesteuert ein zweites Taktsignal abgeleitet und statt des ersten Taktsignals der integrierten Schaltung zugeführt wird, wobei Abstände zwischen Taktflanken des zweiten Taktsignals zufällig über die Zeit variieren.

Dies hat den Vorteil, dass ein zeitlicher Ablauf von Nutzrechenoperationen unabhängig von in der Datenverarbeitungseinrichtung bearbeiteten Daten verzerrt wird, so dass ein bzgl. der Nutzrechenoperationen charakteristischer Anteil in einem Stromverbrauch der integrierten Schaltung verschleiert wird und mittels einer "Differential Power Analysis" nicht mehr analysierbar ist.

Zur weiteren Verschleierung eines charakteristischen Anteiles im Stromverbrauch der integrierten Schaltung von Berechnung bzw. Nutzoperationen der integrierten Schaltung wird die integrierte Schaltung zufallsgesteuert in verschiedene Betriebsarten geschaltet.

Zum Verhindern einer Wiederholbarkeit des charakteristischen Anteils im Stromverbrauch von identischen Nutzoperationen umfassen die verschiedenen Betriebsarten wenigstens zwei Berechnungsmethoden, welche auf verschiedenen Berechnungswegen ein identisches Ergebnis erhalten.

Zur weiteren Verschleierung von Art und Zeitpunkt der Nutzrechenoperationen umfassen die verschiedenen Betriebsarten wenigstens eine Betriebsart "Dummy", bei der von der integrierten Schaltung keine Nutzoperationen sondern Dummyrechenoperationen durchgeführt werden, welche vorbestimmte oder zufällig gewählte Eingangsdaten bearbeiten, wobei das Ergebnis verworfen wird und nicht in die Ergebnisse bzw. Eingangsdaten der Nutzrechenoperationen eingehen. Optional ist zusätzlich eine Betriebsart "Deaktiviert" vorgesehen, bei der von der integrierten Schaltung keine Rechenoperationen ausgeführt werden.

Bei einer Datenverarbeitungseinrichtung der o.g. Art ist es erfindungsgemäß vorgesehen, dass eine mit der integrierten Schaltung verbundene Taktsteuereinheit sowie ein mit der Taktsteuereinheit verbundener Zufallsgenerator vorgesehen ist, wobei die Taktsteuereinheit derart ausgebildet ist, dass sie in Abhängigkeit vom Zufallsgenerator und dem ersten Taktsignal ein zweites Taktsignal erzeugt, welches zufällig variiert und die integrierte Schaltung ansteuert.

Dies hat den Vorteil, dass ein zeitlicher Ablauf von Nutzrechenoperationen unabhängig von in der Datenverarbeitungseinrichtung bearbeiteten Daten verzerrt wird, so dass ein bzgl. der Nutzrechenoperationen charakteristischer Anteil in einem Stromverbrauch der integrierten Schaltung verschleiert wird und mittels einer "Differential Power Analysis" nicht mehr analysierbar ist.

Vorzugsweise Weitergestaltungen der Datenverarbeitungseinrichtung sind in den Ansprüchen 5 bis 7 beschrieben.

Nachstehend wird die Erfindung anhand der beigefügten Zeichnungen näher erläutert. Diese zeigen in

> Fig. 1 ein Blockschaltbild einer bevorzugte Ausführungsform einer erfindungsgemäßen Datenverarbeitungseinrichtung und
> Fig. 2 eine graphische Veranschaulichung verschiedener in der Datenverarbeitungseinrichtung erzeugter und verwendeter Signale.

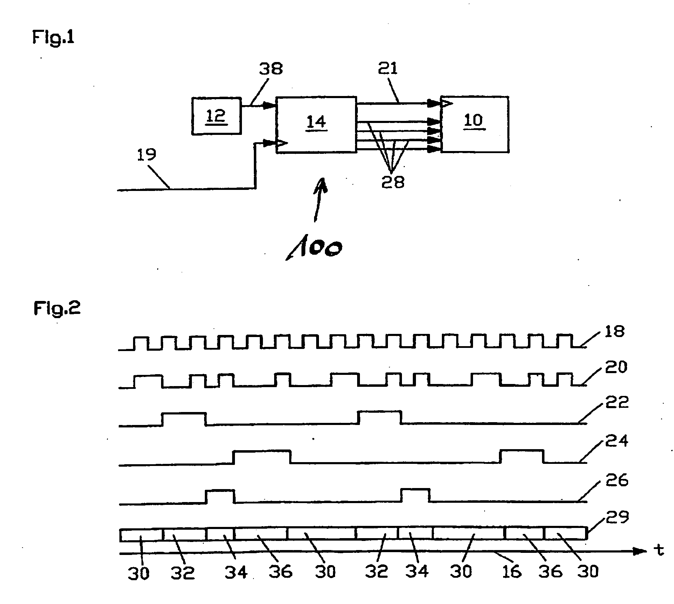

Fig. 1 zeigt eine bevorzugte Ausführungsform einer erfindungsgemäßen Datenverarbeitungseinrichtung 100 mit einer integrierten Schaltung 10, einem Zufallsgenerator 12 und einer Taktsteuereinheit 14. Die integrierten Schaltung 10 führt nachfolgend näher spezifizierte Nutzrechenoperationen aus. Nutzrechenoperationen sind solche Rechenoperationen, welche Eingangsdaten in gewünschter Weise bearbeiten und ein gewünschtes Ergebnis bzw. Zwischenergebnis erzielen. Ein Beispiel hierfür ist eine vorbestimmte Rechenmethode mit kryptographischen Operationen in dedizierten Crypto-Rechenwerken. Diese vorbestimmte Rechenmethode wird nachfolgend als Methode 1 bzw. erste Betriebsart bezeichnet.

Fig. 2 veranschaulicht übereinander verschiedene in der Datenverarbeitungseinrichtung 100 erzeugte und verwendete Signale über die Zeit t, welche über einer horizontalen Achse 16 aufgetragen sind 18 ist ein Signal TAKT$_1$, welches über eine Leitung 19 die Taktsteuereinheit 14 steuert. Mit 20 ist ein Signal TAKT$_2$ bezeichnet, welches von der Taktsteuereinheit 14 erzeugt und über eine Leitung 21 an die integrierte Schaltung 10 ausgegeben wird. 22 ist ein Signal DUMMY, mit 24 ein Signal DEAKT und mit 26 ist ein Signal ALT bezeichnet, welche über Steuerleitungen 28 von der Taktsteuereinheit 14 an die integrierte Schaltung 10 zum Steuern derselben abgegeben werden. In einer zusätzlichen Zeile 29 ist angegeben, in welcher Betriebsart die integrierte Schaltung 10 gesteuert von der Taktsteuereinheit 14 gerade arbeitet. Hierbei steht 30 für eine Betriebsart "Methode 1", 32 für eine Betriebsart "Dummy", 34 für eine Betriebsart "Methode 2" und 36 für eine Betriebsart "Deaktiviert". Nachfolgend werden diese Betriebsarten 30, 32, 34 und 36 und ihre Funktion näher erläutert.

Eine von Paul Kocher im Internet unter http://www.cryptography.com/dpa veröffentlichte "Differential Power Analysis" hat den Ansatz, dass neben den Ein/Ausgangssignalen zusätzlich eine Stromaufnahme I$_a$

bzw. Spannungseinbrüche $\Delta U_a$ einer Versorgungsspannung $U_a$ der integrierten Schaltung analysiert werden. Der Erfolg dieser Analysemethode hängt davon ab, ob man eine Anzahl $N_A$ von analogen ($I_a(t)$ oder $\Delta U_a(t)$) Signalverläufen $S(k,t)$ über die Zeit mit $k=\{1,...N_A\}$ unterschiedlichen Operanden derart aufnehmen kann, dass eine Summenbildung der Form

$$T(i,t) = \sum_{k=1}^{N_A} p(i,k) \cdot S(k,t)$$

mit den Koeffizienten $p(i,k)$ mit $i=\{0,1,2,...\}$ möglich ist. Betrachtet man unterschiedliche Signalverläufe $S(k_1,t_1)$, $S(k_2,t_1)$, $S(k_3,t_1)$... zum gleichen Zeitpunkt $t=t_1$, kann eine "Differential Power Analysis" nur funktionieren, wenn die integrierte Schaltung in diesem Moment die gleiche Rechenoperation mit unterschiedlichen Operanden $k=\{1,..., N_A\}$ ausführt, d.h. die Signalverläufe $S(k,t)$ müssen genau übereinandergelegt werden können. Dieses gilt nicht nur für die Berechnung selbst, sondern auch für die Ein- und Ausgabe von Daten.

Die Erfindung verhindert das "Übereinanderlegen", indem die integrierte Schaltung 10 durch die zufallsgesteuerte Taktsteuereinheit 14 betrieben wird. Darüber hinaus verfügt die integrierte Schaltung neben der Betriebsart "Methode 1" 30 über die Betriebsart "Dummy" 32, in der nachfolgend näher spezifizierte Dummyrechenoperationen ausgeführt werden, die Betriebsart "Deaktiviert" 36, in der von der integrierten Schaltung 10 keine Rechenoperationen ausgeführt und bisherige Resultate bzw. Zwischenergebnisse ggf. gespeichert werden, und die Betriebsart "Methode 2" 34, in der die Nutzrechenoperationen von "Methode 1" 30 mit einem alternativen Verfahren ausgeführt werden, wobei sich das Ergebnis nicht von der ersten Betriebsart "Methode 1" 30 unterscheidet sondern lediglich anders gerechnet wird, so dass sich bei "Methode 2" 34 im Vergleich mit "Methode 1" 30 ein anderer Verlauf des Eingangsstromes $I_a$ bzw. von Spannungsänderungen $\Delta U_a$ der integrierten Schaltung 10 bei gleichem Operanden $k$ ergibt.

Dummyrechenoperationen sind solche Rechenoperationen, welche vorbestimmte oder zufällig gewählte Eingangsdaten bearbeiten, wobei das Ergebnis verworfen wird und nicht in die Ergebnisse bzw. Eingangsdaten der Nutzrechenoperationen eingehen.

Die Taktsteuereinheit 14 wird über Leitung 19 durch das Signal $TAKT_1$ 18 sowie von dem Zufallsgenerator 12 über Leitung 38 gesteuert. Die Taktsteuereinheit 14 generiert aus $TAKT_1$ 18 und dem Eingang von Leitung 38 ein zufälliges Taktsignal $TAKT_2$ 20, welches die Zeitachse 16 in $S(k,t)$ unabhängig von in der integrierten Schaltung 10 gerechneten Daten verzerrt. Hierdurch ist die o.g. Summenbildung der "Differential Power Analysis" nicht mehr mit dem gewünschten Ergebnis durchführbar.

Ferner werden von einer Taktflanke bis zu einer später folgenden Taktflanke auf die Steuerleitungen 28 in Abhängigkeit vom Zufallsgenerator die Steuersignale DUMMY 22, DEAKT 24 und ALT 26 in der in Fig. 2 dargestellten Weise gesetzt. Bei dem Signal DUMMY 22 befindet sich die integrierte Schaltung 10 in der Betriebsart "Dummy" 32, bei dem Signal DEAKT 24 befindet sich die integrierte Schaltung 10 in der Betriebsart Deaktiviert 36, bei dem Signal ALT 26 befindet sich die integrierte Schaltung 10 in der Betriebsart "Methode 2" 34 und bei keinem Signal auf den Steuerleitungen 28 befindet sich die integrierte Schaltung 10 in der Betriebsart "Methode 1" 30, wie aus der die Betriebsarten angebenden Zeile 29 in Fig. 2 ersichtlich.

Die Betriebsart "Dummy" 32 verschleiert die eigentliche Berechnung $S(k,t)$. Ggf. sind mehrere verschiedene Betriebsarten "Dummy n" mit entsprechenden verschiedenen Signalen "DUMMY n" vorgesehen. Besonders vorteilhaft ist hier, dass Zeitpunkt und Dauer der Dummysignale nicht von der zu schützenden integrierten Schaltung 10 selbst sondern durch die externen Einrichtungen Zufallsgenerator 12 und Taktsteuereinheit 14 bestimmt werden. In der Betriebsart "Deaktiviert" 36 wird die Zeitachse 16 weiter zusätzlich verzerrt, so dass die o.g. Summenbildung der "Differential Power Analysis" zusätzlich erschwert bzw. unmöglich wird. In der Betriebsart "Methode 2" 34 erfolgt eine weitere Verschleierung der Berechnung, so dass die Berechnung $S(k,t)$ schlecht identifizierbar ist. Ggf. sind weitere unterschiedliche Betriebsarten mit anderem Berechnungsweg "Methode n" vorgesehen, jeweils zugehörigen Signalen "ALT n".

Zusammenfassend wird erfindungsgemäß ein charakteristischer Anteil des Stromverbrauchs der integrierten Schaltung 10 nicht eliminiert sondern verschleiert. Hierzu werden flexibel verschiedene Verschleierungsmethoden mittels der Taktsteuereinheit 14 miteinander kombiniert. Teilweise werden durch Dummyberechnungen Dummysignale generiert, welche von außen als solche nicht erkennbar sind, da sie zufällig erzeugt werden.

BEZUGSZEICHENLISTE:

| | |
|---|---|
| 100 | Datenverarbeitungseinrichtung |
| 10 | integrierte Schaltung |
| 12 | Zufallsgenerator |
| 14 | Taktsteuereinheit |
| 16 | horizontalen Achse t |
| 18 | Signal $TAKT_1$ |
| 19 | Leitung |
| 20 | Signal $TAKT_2$ |
| 21 | Leitung |
| 22 | Signal DUMMY |
| 24 | Signal DEAKT |
| 26 | Signal ALT |
| 28 | Steuerleitungen |

29 Zeile Betriebsarten
30 Betriebsart "Methode 1"
32 Betriebsart "Dummy"
34 Betriebsart "Methode 2"
36 Betriebsart "Deaktiviert"
38 Leitung

**Patentansprüche**

1. Verfahren zum Betreiben einer Datenverarbeitungseinrichtung (100), insbesondere einer Chipkarte, mit einer integrierten Schaltung (10), welche in Abhängigkeit von einem Taktsignal Nutzrechenoperationen, insbesondere kryptographische Operationen, ausführt, **dadurch gekennzeichnet, daß** aus einem ersten Taktsignal (18) zufallsgesteuert ein zweites Taktsignal (20) abgeleitet und statt des ersten Taktsignals der integrierten Schaltung (10) zugeführt wird, wobei Abstände zwischen Taktflanken des zweiten Taktsignals zufällig über die Zeit variieren, wobei die integrierte Schaltung (10) zufallsgesteuert in verschiedene Betriebsarten (30, 32, 34, 36) geschaltet wird, und wobei die verschiedenen Betriebsarten wenigstens zwei Berechnungsmethoden (30, 34) umfassen, welche auf verschiedenen Berechnungswegen ein identisches Ergebnis erhalten.

2. Verfahren nach Anspruch 1, **dadurch gekennzeichnet, daß** die verschiedenen Betriebsarten wenigstens eine Betriebsart "Dummy" (32) umfassen, bei der von der integrierten Schaltung (10) keine Nutzoperationen sondern Dummyrechenoperationen durchgeführt werden, welche vorbestimmte oder zufällig gewählte Eingangsdaten bearbeiten, wobei das Ergebnis verworfen wird und nicht in die Ergebnisse bzw. Eingangsdaten der Nutzrechenoperationen eingehen.

3. Verfahren nach einem der Ansprüche 1 oder 2, **dadurch gekennzeichnet, daß** die verschiedenen Betriebsarten eine Betriebsart "Deaktiviert" (36) umfassen, bei der von der integrierten Schaltung (10) keine Rechenoperationen ausgeführt werden.

4. Datenverarbeitungseinrichtung (100), insbesondere Chipkarte, insbesondere zum Ausführen eines Verfahrens gemäß wenigstens einem der vorhergehenden Ansprüche, mit einer integrierten Schaltung (10), welche in Abhängigkeit von einem Taktsignal (18) Nutzrechenoperationen, insbesondere kryptographische Operationen, ausführt, **dadurch gekennzeichnet, daß** eine mit der integrierten Schaltung (10) verbundene Taktsteuereinheit (14) sowie ein mit der Taktsteuereinheit (14) verbundener Zufallsgenerator (12) vorgesehen ist, wobei die Taktsteuereinheit (14) derart ausgebildet ist, daß sie in Abhängigkeit vom Zufallsgenerator (12) und einem ersten Taktsignal (18) ein zweites Taktsignal (20) erzeugt, welches zufällig variiert und die integrierte Schaltung (10) ansteuert, wobei die Taktsteuereinheit (14) derart ausgebildet ist, daß sie in Abhängigkeit vom Zufallsgenerator (12) die integrierte Schaltung (10) über Steuerleitungen (28) zufallsgesteuert in verschiedene Betriebsarten (30, 32, 34, 26) schaltet, und wobei die verschiedenen Betriebsarten (30, 32, 34, 36) wenigstens zwei Berechnungsmethoden (30, 34) umfassen, welche auf verschiedenen Berechnungswegen ein identisches Ergebnis erhalten.

5. Datenverarbeitungseinrichtung (100) nach Anspruch 4, **dadurch gekennzeichnet, daß** die verschiedenen Betriebsarten (30, 32, 34, 36) wenigstens eine Betriebsart "Dummy" (32) umfassen, bei der die integrierte Schaltung (10) keine Nutzoperationen sondern Dummyrechenoperationen durchführt, welche vorbestimmte oder zufällig gewählte Eingangsdaten bearbeiten, wobei das Ergebnis nicht in Ergebnisse bzw. Eingangsdaten der Nutzrechenoperationen eingehen.

6. Datenverarbeitungseinrichtung (100) nach einem der Ansprüche 4 oder 5, **dadurch gekennzeichnet, daß** die verschiedenen Betriebsarten (30, 32, 34, 36) eine Betriebsart "Deaktiviert" (36) umfassen, bei der die integrierten Schaltung (10) keine Rechenoperationen ausführt.

7. Datenverarbeitungseinrichtung (100) nach einem der Ansprüche 4 bis 6, **dadurch gekennzeichnet, daß** mindestens bei einer weiteren Betriebsart die Zeitachse (16) weiter zusätzlich verzerrt wird, so daß die Summenbildung der "Differential Power Analysis" zusätzlich erschwert bzw. unmöglich wird.

**Claims**

1. A method of operating a data processing device (100), more particularly a chip card, including an integrated circuit (10) which executes useful arithmetic operations, more particularly cryptographic operations, in dependence on a clock signal, **characterized in that** a second clock signal (20) is derived from a first clock signal (18) under random control so as to be applied to the integrated circuit (10) instead of the first clock signal, while distances between clock edges of the second clock signal vary at random over time, the integrated circuit (10) being switched under random control to various modes of operation (30, 32, 34, 36) and while the various modes of operation comprise at least two calculation methods (30, 34) which provide an identical result via different ways of calculation.

**2.** A method as claimed in claim 1, **characterized in that** the various modes of operation include at least one mode of operation called "dummy" (32) in which the integrated circuit (10) does not carry out any useful operations but dummy arithmetic operations which act on predetermined or random input data, the result being rejected and not taken up in the results or input data for the useful arithmetic operations.

**3.** A method as claimed in one of the claims 1 or 2, **characterized in that** the various modes of operation include a mode called "deactivated" (36) in which the integrated circuit (10) does not carry out any arithmetic operations.

**4.** A data processing device (100), more particularly a chip card, which is specifically intended to carry out a method as claimed in at least one of the preceding claims and includes an integrated circuit (10) which carries out useful arithmetic operations, more particularly cryptographic operations, in dependence on a clock signal (18), **characterized in that** the device is provided with a clock control unit (14), which is connected to the integrated circuit (10), as well as a random pulse generator (12), which is connected to the clock control unit (14), the clock control unit (14) being constructed in such a manner that it generates a second clock signal (20) in dependence on the random pulse generator (12) and a first clock signal (18), which second clock signal varies at random and drives the integrated circuit (10), the clock control unit (14) being constructed such that it switches under random control and in dependence on the random pulse generator (12) the integrated circuit (10) via control leads (28) to various modes of operation (30, 32, 34, 36), and in which the various modes of operation (30, 32, 34, 36) comprise at least two calculation methods which provide an identical result via different ways of calculation.

**5.** A data processing device (100) as claimed in claim 4, **characterized in that**, the various modes of operation (30, 32, 34, 36) include at least one mode of operation called "dummy" (32) in which the integrated circuit (10) does not carry out any useful operations but dummy arithmetic operations which act on predetermined or random input data, the result not being taken up in results or input data for the useful arithmetic operations.

**6.** A data processing device (100) as claimed in any one of claim 4 or 5, **characterized in that** the various modes of operation (30, 32, 34, 36) include a mode of operation called "deactivated" (36) in which the integrated circuit (10) does not carry out any arithmetic operations.

**7.** A data processing device (100) as claimed in any one of the claims 4 to 6, **characterized in that** in at least one further mode of operation the time base (16) is additionally distorted so that the summing according to the "Differential Power Analysis" method is additionally impeded or made impossible.

**Revendications**

**1.** Procédé pour le fonctionnement d'un dispositif de traitement de données (100), en particulier d'une carte à puce, avec un circuit intégré (10) qui, en fonction d'un signal de synchronisation, effectue des opérations de calcul utiles, en particulier des opérations cryptographiques, **caractérisé en ce qu'**à partir d'un premier signal de synchronisation (18) commandé de façon aléatoire, on dérive un second signal de synchronisation (20) et, à la place du premier signal de synchronisation, celui-ci est amené au circuit intégré (10), les écarts entre les flancs de synchronisation du second signal de synchronisation varient dans le temps de façon aléatoire, le circuit intégré (10) commandé de façon aléatoire étant commuté dans différents types de fonctionnement (30, 32, 34, 36), et les différents types de fonctionnement comprenant au moins deux méthodes de calcul (30, 34) qui obtiennent un résultat identique pour différents modes de calcul.

**2.** Procédé selon la revendication 1, **caractérisé en ce que** les différents types de fonctionnement comprennent au moins un type de fonctionnement fictif (32) dans lequel, à partir du circuit intégré (10), on effectue non pas des opérations utiles mais des opérations de calcul fictif, qui traitent des données d'entrée prédéterminées ou choisies au hasard, le résultat étant rebuté et n'entrant pas dans les résultats ou les données d'entrée des opérations de calcul utiles.

**3.** Procédé selon l'une des revendications 1 ou 2, **caractérisé en ce que** les différents types de fonctionnement comprennent un type de fonctionnement "désactivé" (36), dans lequel aucune opération de calcul n'est effectuée par le circuit intégré (10).

**4.** Dispositif de traitement de données (100), en particulier carte à puce, notamment pour l'exécution d'un procédé selon au moins l'une des revendications précédentes, avec un circuit intégré (10) qui, en fonction d'un signal de synchronisation (18), effectue des opérations de calcul utiles, notamment des opérations cryptographiques, **caractérisé en ce qu'**une unité de commande de synchronisation (14) reliée au circuit intégré (10) ainsi qu'un générateur aléatoire (12) relié à l'unité de commande de synchronisation (14) sont prévus, dans lequel l'unité de commande de synchronisation (14) est configurée de telle sorte qu'elle produit un second signal de synchronisation (20) en fonction du générateur aléatoire (12) et un premier signal de synchronisation varie de façon aléatoire et pilote le circuit intégré (10), dans lequel l'unité de commande de synchronisation (14) est conçue de telle sorte qu'en fonction du générateur aléatoire (12), elle commute le circuit intégré (10) par l'intermédiaire des lignes de commande (28) en commande aléatoire dans différents types de fonctionnement (30, 32, 34, 26), et dans lequel les différents types de fonctionnement (30, 32, 34, 36) comprennent au moins deux méthodes de calcul (30, 34) qui obtiennent un résultat identique pour différents modes de calcul.

5. Dispositif de traitement de données (100) selon la revendication 4, **caractérisé en ce que** les différents types de fonctionnement (30, 32, 34, 36) contiennent au moins un type de fonctionnement fictif (32), dans lequel le circuit intégré (10) n'effectue aucune opération utile mais des opérations de calcul fictif qui traitent des données d'entrée prédéterminées ou choisies de façon aléatoire, dans lequel le résultat n'entre pas dans les résultats ou les données d'entrée des opérations de calcul utiles.

6. Dispositif de traitement de données (100) selon l'une des revendications 4 ou 5, **caractérisé en ce que** les différents types de fonctionnement (30, 32, 34, 36) comprennent un type de fonctionnement "désactivé" (36), dans lequel le circuit intégré (10) n'effectue aucune opération de calcul.

7. Dispositif de traitement de données (100) selon l'une des revendications 4 à 6, **caractérisé en ce qu'**au moins dans un autre type de fonctionnement, l'axe de temps (16) subit une distorsion, de sorte que la totalisation de "l'analyse différentielle de la consommation de courant" est de plus rendue difficile, voire impossible.

Fig.1

```
        38              21
   ┌────┐    ┌────────┐      ┌────────┐
   │ 12 │───→│   14   │═════→│   10   │
   └────┘  ┌→│        │══════│        │
 19 ───────┘ └────────┘  │   └────────┘
                ↑        28
               100
```

Fig.2

```
      ┌┐┌┐┌┐┌┐┌┐┌┐┌┐┌┐┌┐┌┐┌┐┌┐┌┐┌┐┌┐┌┐┌┐┌┐  18
──────┘└┘└┘└┘└┘└┘└┘└┘└┘└┘└┘└┘└┘└┘└┘└┘└┘└──

      ┌┐┌┐┌┐┌┐    ┌┐┌┐┌┐┌┐    ┌┐┌┐┌┐┌┐┌┐    20
──────┘└┘└┘└┘└────┘└┘└┘└┘└────┘└┘└┘└┘└┘└──

        ┌──┐                ┌──┐             22
────────┘  └────────────────┘  └────────────

              ┌──┐                    ┌──┐   24
──────────────┘  └────────────────────┘  └──

        ┌─┐              ┌─┐                  26
────────┘ └──────────────┘ └─────────────────

  ┌──┬─┬──┬──┬────┬────┬─┬──┬────┬───┬─┐      29
──┤  │ │  │  │    │    │ │  │    │   │ ├──→ t
  └──┴─┴──┴──┴────┴────┴─┴──┴────┴───┴─┘
   30  32  34  36  30  32  34  30  16  36  30
```

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4813024 A
- EP 0482975 B1
- EP 0507669 A1
- FR 2693014 B1
- EP 0790547 A1